# EUROPEAN PATENT APPLICATION

(11) **EP 4 350 290 A1**
(43) Date of publication of application: **10.04.2024**
(21) Application number: 22199352.0
(22) Date of filing: 03.10.2022
(51) Int. Cl.: G01C 21/20, B64C 39/02, G05D 1/00, G06V 20/17, B64U 101/30

(54) **AERIAL IMAGE CAPTURE**

(71) Applicant: Nokia Technologies Oy, 02610 Espoo (FI)
(72) Inventor: VAN DEN BROECK, Marc, 2860 Sint-Katelijne-Waver (BE); RADIVOJEVIC, Zoran, Cambridge, CB3 0FA (GB)
(74) Representative: Whiting, Gary

(57) **Abstract**

A method, apparatus and computer program is described comprising: setting a flight path for one or more aerial image capturing devices, based, at least in part, on one or more parameters, wherein the means for setting the respective flight path(s) comprises a model trained using at least one of: one or more video data examples or one or more flight path examples; and providing instructions to the respective aerial image capturing device(s) to capture video data of a first scene based on the respective flight path.

## Description

### Field

The present specification relates to the use of an aerial image capturing device for capturing video data.

### Background

The use of an aerial image capturing device (e.g. an uncrewed aerial vehicle) for capturing video data is known. There remains a need for further developments in this field.

### Summary

In a first aspect, this specification describes apparatus comprising: means for setting a flight path for one or more aerial image capturing devices, based, at least in part, on one or more parameters, wherein the means for setting the respective flight path(s) comprises a model (e.g. a machine-learning model or an artificial intelligence) trained using at least one of: one or more video data examples or one or more flight path examples; and means for providing instructions to the respective aerial image capturing device(s) to capture video data of a first scene based on the respective flight path. The flight path may describe one or more of movement, orientation or zoom level of a respective aerial imaging capturing device. The video capturing maybe controlled (e.g. by zooming) independent of the setting of the flight path. Audio data may be captured with video data; alternatively, captured video data may be synchronised to existing audio.

The model maybe trained using one or more pairs, wherein each pair comprises one of the one or more video data examples and a corresponding one of the one or more flight path examples. At least some of said pairs may be associated with audio examples. Alternatively, or in addition, at least some of said pairs may be associated with characteristics of movement scenes. Example characteristics might include different types of sports events or movements, such as a goal being scored.

The one or more video data examples and/or one or more flight path examples maybe obtained from one or more social media applications. Alternatively, or in addition, the one or more video data examples and/or one or more flight path examples maybe obtained from historical video content (e.g. recorded clips from sports events).

The one or more parameters may relate, at least in part, to audio content (e.g. an audio track name or some other identifier).

The one or more parameters may be based, at least in part, on a characteristic of the first scene (e.g. an indication that a goal is likely to be scored).

The first scene may comprise at least a first user (e.g. a dancer) of a first user device, wherein a respective aerial image capturing device is associated with the first user. The first user device may, for example, be a smartphone. The respective flight path maybe configured to provide an indication to at least the first user of one or more movements (e.g. dance movements) associated with the respective flight path. By way of example, the flight path may cause the respective aerial image capturing device to provide said indication.

Some example embodiments further comprise means for detecting a trigger for starting a flight sequence of said one or more aerial image capturing device(s), wherein said flight sequence implements said flight path. The trigger may be based, at least in part, on a detected movement within the first scene. For example, an aerial image capturing device may effectively "see" user(s) and may event copy the way in which one or more users to "dance" with the users. Alternatively, or in addition, the trigger may be based, at least in part, on start of rendering a first audio.

Some example embodiments further comprise means for streaming the first audio to one or more of said aerial image capturing device(s). In some other embodiments, the first audio itself is not streamed. For example, metadata may be provided, such as a beat tempo/timing information, rather than (or even in addition to) the audio itself.

Some example embodiments further comprise: means for receiving a request from a second aerial image capturing device to capture the first scene; and means for providing instructions to the second aerial image capturing device to capture the first scene based on a flight path determined for the second aerial image capturing device.

The said means may comprise: at least one processor; and at least one memory including computer program code. The at least one memory and computer program code may be configured to, with the at least one processor, cause the performance of the apparatus.

In a second aspect, this specification describes a method comprising: setting a flight path for one or more aerial image capturing devices, based, at least in part, on one or more parameters, wherein the means for setting the respective flight path(s) comprises a model trained using at least one of: one or more video data examples or one or more flight path examples; and providing instructions to the respective aerial image capturing device(s) to capture video data of a first scene based on the respective flight path. The flight path may describe one or more of movement, orientation or zoom level of a respective aerial imaging capturing device. The video capturing maybe controlled (e.g. by zooming) independent of the setting of the flight path. Audio data may be captured with video data; alternatively, captured video data may be synchronised to existing audio.

The model may be trained using one or more pairs, wherein each pair comprises one of the one or more video data examples and a corresponding one of the one or more flight path examples.

The one or more video data examples and/or one or more flight path examples may be obtained from one or more of a social media application and historical video content (e.g. recorded clips from sports events).

The one or more parameters may relate, at least in part, to audio content (e.g. an audio track name or some other identifier).

The one or more parameters may be based, at least in part, on a characteristic of the first scene (e.g. an indication that a goal is likely to be scored).

The first scene may comprise at least a first user (e.g. a dancer) of a first user device, wherein a respective aerial image capturing device is associated with the first user.

Some example embodiments further comprise detecting a trigger for starting a flight sequence of said one or more aerial image capturing device(s), wherein said flight sequence implements said flight path.

Some example embodiments further comprise streaming the first audio to one or more of said aerial image capturing device(s). In some other embodiments, the first audio itself is not streamed. For example, metadata may be provided, such as a beat tempo/timing information, rather than (or even in addition to) the audio itself.

Some example embodiments further comprise: receiving a request from a second aerial image capturing device to capture the first scene; and providing instructions to the second aerial image capturing device to capture the first scene based on a flight path determined for the second aerial image capturing device.

In a third aspect, this specification describes computer-readable instructions which, when executed by a computing apparatus, cause the computing apparatus to perform (at least) any method as described with reference to the second aspect.

In a fourth aspect, this specification describes a computer-readable medium (such as a non-transitory computer-readable medium) comprising program instructions stored thereon for performing (at least) any method as described with reference to the second aspect.

In a fifth aspect, this specification describes an apparatus comprising: at least one processor; and at least one memory including computer program code which, when executed by the at least one processor, causes the apparatus to perform (at least) any method as described with reference to the second aspect.

In a sixth aspect, this specification describes a computer program comprising instructions for causing an apparatus to perform at least the following: setting a flight path for one or more aerial image capturing devices, based, at least in part, on one or more parameters, wherein the means for setting the respective flight path(s) comprises a model trained using at least one of: one or more video data examples or one or more flight path examples; and providing instructions to the respective aerial image capturing device(s) to capture video data of a first scene based on the respective flight path.

In a seventh aspect, this specification describes flight path controller (or some other means) for setting a flight path for one or more aerial image capturing devices, based, at least in part, on one or more parameters, wherein the means for setting the respective flight path(s) comprises a model trained using at least one of: one or more video data examples or one or more flight path examples; and a imaging controller (or some other means) for providing instructions to the respective aerial image capturing device(s) to capture video data of a first scene based on the respective flight path.

### Brief description of the drawings

Example embodiments will now be described, by way of example only, with reference to the following schematic drawings, in which:
FIG. 1 is a block diagram of an aerial image capturing device that may be used in example embodiments;
FIGS. 2 to 4 are block diagrams of systems in accordance with example embodiments;
FIG. 5 is a flow chart showing an algorithm in accordance with an example embodiment;
FIG. 6 is a block diagram of a model in accordance with an example embodiment;
FIGS. 7 to 12 are flow charts showing algorithms in accordance with example embodiments;
FIG. 13 is a block diagram of a system in accordance with an example embodiment;
FIG. 14 is a flow chart showing an algorithm in accordance with an example embodiment;
FIG. 15 is a block diagram of a system in accordance with an example embodiment;
FIG. 16 is a block diagram of a system in accordance with an example embodiment;
FIG. 17 shows a neural network used in some example embodiments;
FIG. 18 is a block diagram of components of a system in accordance with an example embodiment; and
FIG. 19 shows an example of tangible media for storing computer-readable code which when run by a computer may perform methods according to example embodiments described above.

### Detailed description

The scope of protection sought for various embodiments of the disclosure is set out by the independent claims. The embodiments and features, if any, described in the specification that do not fall under the scope of the independent claims are to be interpreted as examples useful for understanding various embodiments of the disclosure.

In the description and drawings, like reference numerals refer to like elements throughout.

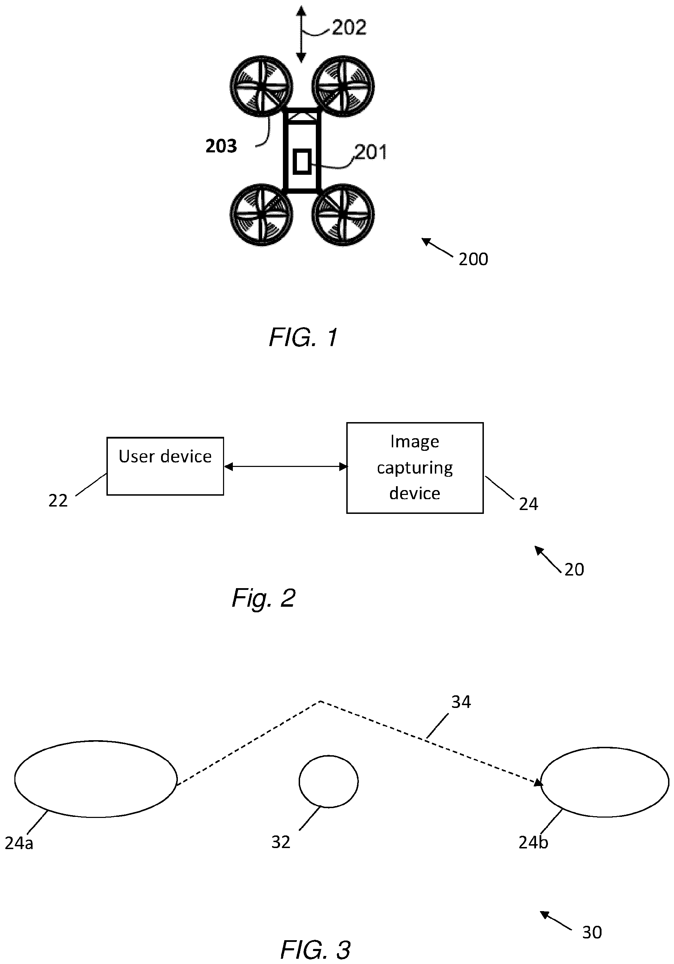

FIG. 1 is a block diagram of an aerial image capturing device, indicated generally by the reference numeral 200, that may be used in example embodiments. The aerial image capturing device may take the form of an uncrewed aerial vehicle (UAV), sometimes referred to as a "drone" or an "unmanned aerial vehicle".

The aerial image capturing device 200 includes an imaging device 201 and has a communication means indicated by arrow 202. As discussed in detail, the aerial image capturing device 200 may be in two-way communication with a user device (e.g. a mobile communication device). Alternatively, or in addition, the aerial image capturing device 200 may be in two-way communication with a network node (e.g. a base station or gNB) of a mobile communication system.

In FIG. 1, the aerial image capturing device 200 is illustrated as a quadcopter including four propellers 203. It will of course be appreciated that aerial image capturing device 200 may take many forms, such as multicopter (such as a tricopter, hexacopter or octocopter), ornithopter, gyrocopter or other aircraft.

FIG. 2 is a block diagram of a system, indicated generally by the reference numeral 20, in accordance with an example embodiment. The system 20 comprises a user device 22 and an image capturing device 24. The user device 22 may be a mobile communication device (e.g. a user equipment, UE). The image capturing device may be the aerial image capturing device 200 described above or some similar image capturing device. As shown in FIG. 2, the user device 22 and the image capturing device 24 may be in two-way communication (e.g. via the communication means 202 of the device 200). The two-way communication may take place over a short-range communication system (such as Bluetooth^{®}), or a longer range communication system.

In an example use of the system 20, the image capturing device 24 may be used to record video images of a user; for example, a user may be dancing to a song and wish to record a video of that dance, and possibly upload the recorded video to a website or a social media service.

FIG. 3 is a block diagram of a system, indicated generally by the reference numeral 30, in accordance with an example embodiment. The system includes the image capturing device 24 and a user 32. The image capturing device may be in two-way communication with the user device 22 (not shown) that may, for example, be held or worn by the user 32.

As shown in FIG. 3, the image capturing device 24 moves along a path 34 from a first imaging location 24a to a second imaging location 24b so that video images of the user 32 can be captured from different angles. The path 34 may be set and/or controlled by the user device 22.

A trend has emerged for users of social media applications to copy each other by doing identical dance moves for a particular song and then uploading a video of their version of the dance to the social media application. Sometimes, these videos are also recorded in a similar or identical way, for example by moving an image capturing device (such as the device 24) along a similar or identical path (such as the path 34) whilst capturing video of a user. The image capturing device may be moved manually by the user (or some other person), but it would be possible to use an image capturing device, such as the device 24 described above.

In the event that the user 32 wants to record a video of themselves dancing to a particular music track in a similar manner to a different user (as uploaded to a social media application, for example), the user 32 has a number of challenges.

First, it may be difficult for the user 32 to control the positioning of a video camera or other image capturing device whilst dancing. This is particularly true if the video camera or other image capturing device is to be moved along a path (such as the path 34). In order for a previously uploaded dance to be copied accurately, it may be important the movement and control of the image capturing device matches that of the image capturing device of the previously uploaded dance.

Moreover, it may be desirable to record such a video whilst playing music that is being danced to. If, however we would use the image capturing device 24 to record or live-stream a music video, several problems may occur:
- If the image capturing device has propellers, these may make a loud sound. If the image capturing device is itself outputting the music that the user is dancing to, then the audio may not always be audible to the user.
- If the user plays the music for intended capture by the image capturing device (e.g. using a user device, such as the user device 22 described above), the music may not be successfully captured.
- If a user wears earbuds or the like, the image capturing device will not be able to hear or capture any music being played (either for recording purposes or for control purposes).

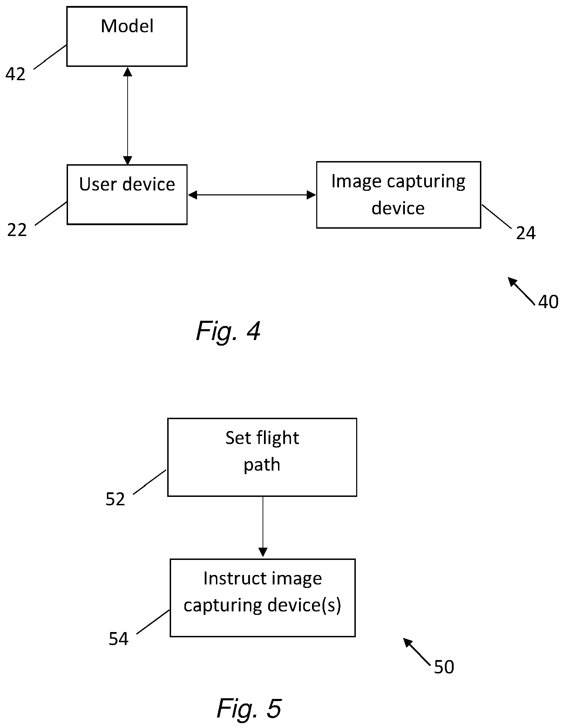

FIG. 4 is a block diagram of a system, indicated generally by the reference numeral 40, in accordance with an example embodiment. The system 40 comprises the user device 22 and the image capturing device 24 described above and additionally comprises a model 42 that is available to the user device 22. As discussed further below, the model 42 may be a machine-learning or artificial intelligence model. Note that the model 42 may be stored at the user device 22, or may be stored elsewhere, but made available to the user device 22 (e.g. over a network, such as the Internet).

The user (e.g. user 32) may use the user device 22 to select a song to dance to. For example, a user can use an existing smartphone application to select a song.

The model 42 can be used to anticipate certain generic dance moves of the user based on the selected song. The image capturing device 24 can be controlled based on expected dance moves (as output by the model 42). For example, the image capturing device 24 can move left, right, up and down or even roll based on the output from the model 42. In one example embodiment, the image capturing device 24 may be controlled such that it appears to dance together with the user.

Thus, the model 42 may seek to determine a position of the image capturing device 24 with respect to a user (or the user device 22) in order to be able to steer the image capturing device 24 to capture the desired video.

FIG. 5 is a flow chart showing an algorithm, indicated generally by the reference numeral 50, in accordance with an example embodiment. The algorithm 50 may, for example, be implemented using the system 40 described above.

The algorithm 50 starts at operation 52, where a flight path (or flight plan) is set. The flight path may describe the movement of an image capturing device (such as the image capturing device 24) relative to a user (e.g. user 32, such as a dancer) or the user device 22. The flight path may include features such as a position or an orientation of the image capturing device.

As discussed further below, the flight path may be based, at least in part, on one or more parameters. Example parameters include audio content (e.g. an audio track name or some other identifier) or a characteristic of a scene being recorded (e.g. a prediction or indication that a particular event is about to occur).

At operation 54, instructions are provided to the image capturing device to capture video data of a first scene based on the respective flight path. The video capturing may be controlled independently of the flight path. If the video is to be synchronised with an audio track (which would generally be relevant to a dancing embodiment), audio data may be captured together with the video data; alternatively, captured video data may be synchronised to an existing audio file/track. Note that although a single image capturing device (such as the device 24) may be controlled by the algorithm 50, it would also be possible to control multiple image capturing devices (as described further below).

Other features, such as a zoom level of the image capturing device may also be defined as part of the operation 52 or the operation 54.

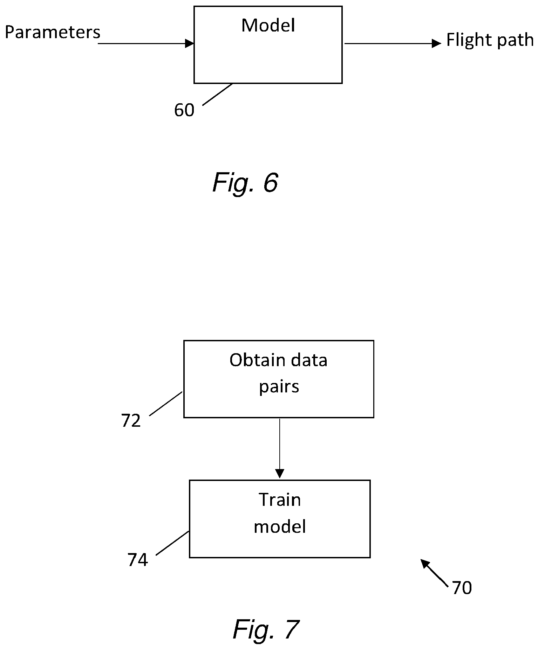

FIG. 6 is a block diagram of a model 60, in accordance with an example embodiment. The model 60 is an example implementation of the model 42 described above.

The model 60 receives one or more parameters and outputs a flight path dependent, at least in part, on the received parameters. The one or more parameters may relate, at least in part, to audio content (such as an audio track name or some other identifier). Alternatively, or in addition, the one or more parameters may be based, at least in part, on a characteristic of the first scene.

The model 60 may be used to set the flight path in the operation 52 of the algorithm 50 described above. By way of example, the model 60 may receive parameter(s) from a user device (such as the user device 22) and return a flight plan to that user device, thereby implementing operation 52 of the algorithm 50 described above.

The model 60 may be trained using at least one of: one or more video data examples or one or more flight path examples. Thus, existing video and/or flight path examples may be used in the setting of the flight path to enable existing videos to be copied, In some examples, the model 60 may be trained based on features extracted from one or more of the existing videos.

FIG. 7 is a flow chart showing an algorithm, indicated generally by the reference numeral 70, in accordance with an example embodiment. The algorithm 70 may be used to train models such as the models 42 and 60 described above.

The algorithm 70 starts at operation 72, where one or more pairs of data are obtained for use in training the model. In one example embodiment, each pair comprises one or more video data examples and one or more corresponding flight path examples. The pairs may additionally be associated with audio examples and/or characteristics of movement scenes (e.g. different types of sports moves, as discussed further below). The one or more video data examples and/or one or more flight path examples are may be obtained from one or more of a social media application or historical video content (such a video clips from sports events).

At operation 74, the model is trained, for example using machine learning principles.

The data pairs used for training the model may be repeatedly updated as more training data becomes available, for example as more videos are posted to one or more social media platforms. In order to make use of posted videos, it may be necessary to extract some or all of the following information from a posted video:
- Camera position during image capture (e.g. a camera position relative to one or more dancers).
- Distance between the camera and the subject(s) (e.g. dancers) being videoed;
- The height of the image capturing device (e.g. height relative to the subject(s) or relative to the ground).
- The angle/roll of the image capturing device.

Thus, for example, the algorithm 70 can train a model based on crowdsourced data.

With all this information, the system can now make a flight plan and steer an image capturing device (e.g. a UAV or drone) for a certain music track or dance by predicting a desired flight path of the image capturing device with respect to a user (e.g. a dancer) so that the image capturing device anticipates the desired position of the image capturing device over time (e.g. dependent on where dancer(s) are likely to be positioned and/or how the dancer(s) are likely to behave).

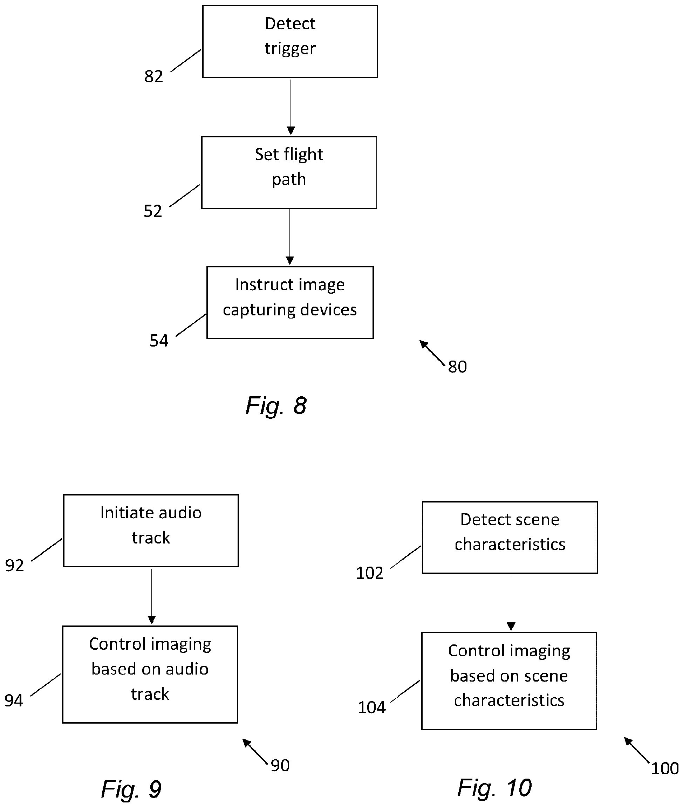

FIG. 8 is a flow chart showing an algorithm, indicated generally by the reference numeral 80, in accordance with an example embodiment.

The algorithm 80 starts at operation 82, where a trigger for starting a flight sequence of one or more first aerial image capturing device(s) is detected. The trigger may be based, at least in part, on a detected movement of one or more users. Alternatively, or in addition, the trigger may be based, at least in part, on start of rendering a first audio at a first user device.

The algorithm 80 then moves to operations 52 and 54 where, as discussed above with reference to FIG. 5, a flight path is set and image capturing device instructed to capture video. The flight sequence triggered in the operation 82 may implement the flight path.

In one example embodiment, an aerial image capturing device is effectively able to "see" a user and "copy" their way of movement to "dance" with them.

FIG. 9 is a flow chart showing an algorithm, indicated generally by the reference numeral 90, in accordance with an example embodiment.

The algorithm 90 starts at operation 92, where an audio track is initiated. For example, initiating an audio track may comprise streaming the first audio to one or more of said first aerial image capturing device(s) whilst the first audio is being rendered at the first user device. For example, a user may select an audio track using the user device and then stream that audio track to the image capturing device. Many alternatives are possible. In one example embodiment, metadata regarding the audio track is provided (e.g. in addition to, or instead of, the track itself). The metadata may, for example, include beat, tempo or timing information.

At operation 94, the aerial image capturing device is controlled dependent on the audio track. For example, the aerial image capturing device may be controlled based on an identity of the audio track or based on metadata described features of the audio track.

In one or more example implementation of the algorithm 90, two or more people may be dancing together. A flight path may be set in which the image capturing device starts with a close shot of one person before panning backwards to reveal more person(s) coming into the scene.

FIG. 10 is a flow chart showing an algorithm, indicated generally by the reference numeral 100, in accordance with an example embodiment.

The algorithm 100 starts at operation 102, where characteristics of a scene are detected. As discussed in detail below, the scene may be a sports event, such that the scene characteristics may relate to an event or action within the sports event (e.g. a prediction that a goal is likely to be scored). At operation 104, the aerial image capturing device is controlled dependent on the detected scene characteristics. For example, the operation 104 may involve an aerial image capturing device being launched in the event that a goal is predicted to be scored and used to fly close to the predicted scorer such that their reaction can be captured.

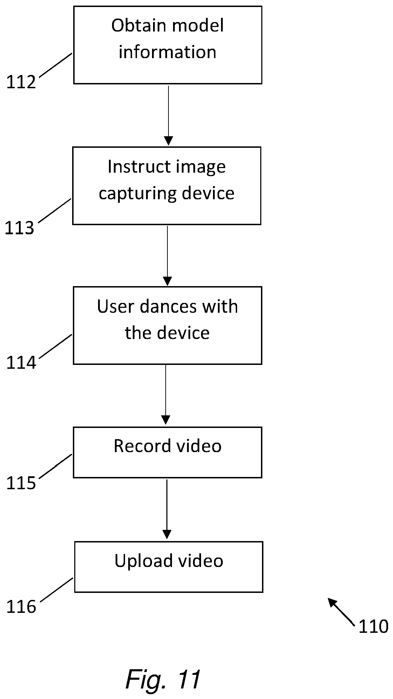

FIG. 11 is a flow chart showing an algorithm, indicated generally by the reference numeral 110, in accordance with an example embodiment.

The algorithm 110 starts at operation 112 where model information is obtained. The model information may, for example, be dependent on an audio track (such as the identity of an audio track or information related to an audio track, for example as defined by metadata relating to the audio track). The operation 112 may, for example, be implemented following the operation 92 described above in which an audio track is initiated.

At operation 113, an image capturing device is instructed dependent on the model information. For example, a flight plan may be provided to the image capturing device. The flight plan may include a flight path that causes the respective image capturing device to provide an indication to one or more users of one or more movements associated with the first audio. The operation 94 described above may control the imaging device based on the instructions received at the image capturing device in the operation 113.

At operation 114, the user dances with the image capturing device. The image capturing device records video (of the user) at operation 115.

The recorded video may then be uploaded (e.g. to a social media application) in the operation 116. The captured video may be uploaded together with the associated audio.

It should be noted that audio and video streams may be separate. An image capturing device may be used to capture a video stream (e.g. in the operation 115 described above). The relevant audio may be provided to the image capturing device using a connection (e.g. a Bluetooth^{®} connection) between a user device and the image capturing device. In order for the video uploaded in the operation 116 to include the relevant audio, it may be necessary to merge the audio with the captured video. Merging of audio and captured video may be performed at the user device, at the image capturing device, or elsewhere (such as at a remote server). For example, if audio metadata is used to control the image capturing device, audio-video merging and synchronising could be carried out at a server.

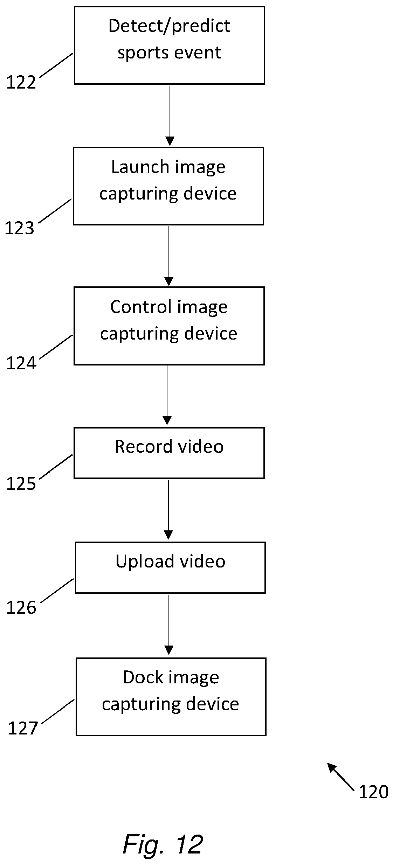

FIG. 12 is a flow chart showing an algorithm, indicated generally by the reference numeral 120, in accordance with an example embodiment.

The algorithm 120 starts at operation 122 where model information is obtained. The model information may, for example, be dependent on actions in a sports event. The sports event may, for example, be the detection that a player is approaching a goal (such that a goal may be scored). The operation 122 may, for example, be an example of the operation 102 described above.

The operation 122 may generate a trigger for the launch, in operation 123, of an image capturing device.

At operation 124, the image capturing device launched in the operation 123 is controlled. For example, a flight plan may be provided to the image capturing device. The image capturing device may be controlled based on scene characteristics, for example based on the output of a model. The operation 124 may therefore be an example implementation of the operation 104.

At operation 125, the image capturing device records video images. For example, the image capturing device may be used to record images of a player within the game who might score a goal.

The recorded video may then be uploaded (e.g. to a social media application) in the operation 126. The image capturing device that was launched in the operation 123 may then return to a docking station in the operation 127. The image capturing device may, for example, be charged when docked.

By way of example, a sports team could benefit from an aerial image capturing device observing a game. When an event occurs, or is predicted to occur (such as a goal being scored), the image capturing device may be launched and can approach a particular player to record video. The image capturing device might, for example, generally be docked on a touchline, or top of a goal, where the game can be observed. The launch could be triggered, for example, based on a team approaching the goal where the imaging device is docked.

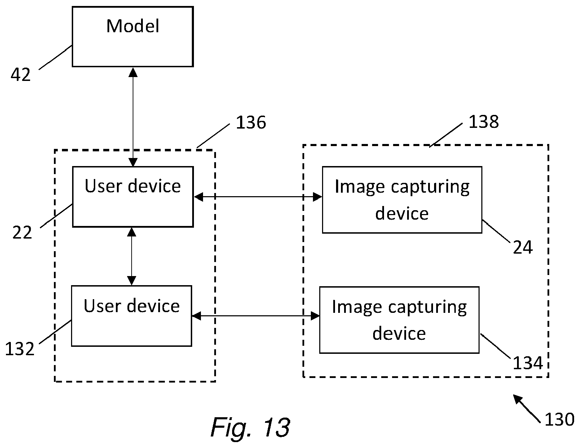

FIG. 13 is a block diagram of a system, indicated generally by the reference numeral 130, in accordance with an example embodiment.

The system 130 comprises the user device 22 (hereinafter referred to as the first user device 22), the image capturing device 24 (hereinafter referred to as the first image capturing device 24) and the model 42 of the system 40 described above. The system 130 further comprises a second user device 132 and a second image capturing device 134. As indicated in FIG. 13, the second user device 132 is in two-way communication with the second image capturing device 134. The first user device 22 and the second user device 132 may be grouped as pair of user devices 136. Similarly, the first image capturing device 24 and the second image capturing device 134 may be grouped as a pair of image capturing devices 138.

A first user may use the first user device 22 to select a song (or other audio content) to dance to. For example, a user can use an existing smartphone application to select a song.

The model 42 is available to the user device 22. As discussed above, the model 42 can be used to anticipate or predict certain generic dance moves of users based on the selected song.

The first user may use the first user device 22 to stream music and may, for example, use headphones or earphones to listen to the music.

The first image capturing device 24 may be launched to capture video of the first user dancing to the music. For example, the first image capturing device 24 may be controlled based on an output of the model 42. The first image capturing device 24 may follow the basic rhythms of the first user's movements (e.g. copying the dancing of the first user). Alternatively, the first user may copy the movement of the first image capturing device 24 (which is controlled based on the model output). In some example embodiments, the first image capturing device 24 may be able to react to sudden, unexpected movements so that the user remains within shot (i.e. within the field-of-view of the imaging device); for example, if the user lunges forward more than expected, the first image capturing device may move back to maintain a safe distance and continue with the flight path from the new location.

A second user may be listening (using the second user device 132) to the same music as the first user. For example, the music may be streamed from the first user device 22 to the second user device 132 (e.g. via Bluetooth^{®} or some similar mechanism).

Depending, for example, on the song and dancing style selected by the first user (e.g. using an application accessible to the first user device 22), the first and second image capturing devices 24, 134 may guide the first and second users respectively to dance together as a pair. For example, the first user may be guided by the first image capturing device 24 and the second user may be guided by the second image capturing device 134.

The captured images could then be uploaded, as discussed above.

When using multiple image capturing devices, such as in the system 130, the flight paths of the image capturing devices may be controlled so as to avoid collisions. Alternatively, or in addition, the flight paths of the image capturing devices may be controlled to avoid capturing images of other image capturing device (e.g. each other) as much as possible.

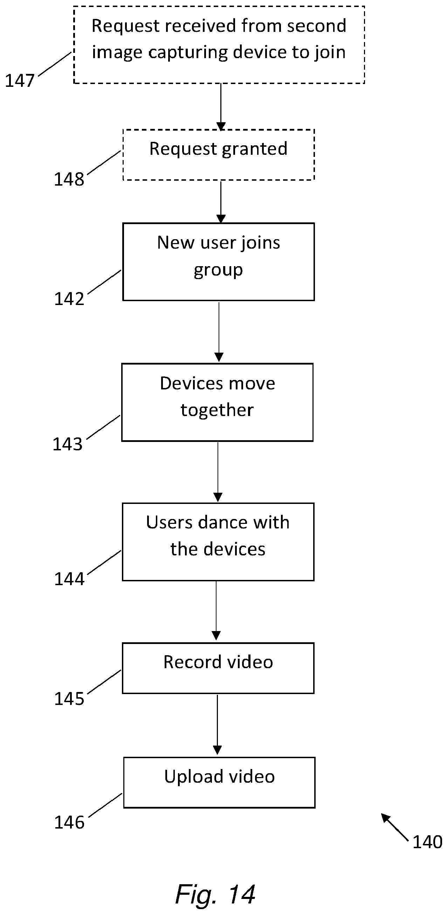

FIG. 14 is a flow chart showing an algorithm, indicated generally by the reference numeral 140, in accordance with an example embodiment. The algorithm 140 may be implemented using the system 130 described above.

Before the start of the algorithm 140, the first user may use a smartphone (the first user device 22) to run an application and download a dancing trend (from the model 42) from the cloud for a particular song he/she is playing. The first user device 22 connects with the first image capturing device 24 and streams audio and/or audio metadata and instructions regarding how to move (according to the song played). Such instructions may relate to how the image capturing device is controlled to move and/or to how a user is expected to move. The first user can see the first image capturing device 24 moving and may copy the move and style of the move in real time. Of course, the user is free to move as they wish and may or may not attempt to perform the dancing trend associated with the song played. Moreover, some movements implemented by an image capturing device may not be intended to be copied by the user; for example, the image capturing device may be controlled to roll for a stylistic effect in the captured video. In this example, the user does not roll, rather the image capturing device is being controlled to capture a video effect (e.g. to recreate an effect based on the existing/crowdsourced video examples).

In an example embodiment, prior to performing operation 142, an optional operation 147 may be performed where a request may be received from the second image capturing device 134 to capture the first scene (e.g. the first scene including the first user dancing). The request may be received at the first user device 22. At optional operation 148, the first user may grant said request using the first user device 22. In response to the request being granted, instructions may be provided to the second image capturing device 134 to capture the first scene. The instructions may be based on a flight path determined for the second aerial image capturing device, where the flight path may be determined based on output(s) of the model 42.

At operation 142 of the algorithm 140, the second user (using the second user device 132 and the second image capturing device 134) approaches the first user and connects with the first user device 22 (e.g. after the first user grants permission to join in the optional operation 148 described above). The first and second user devices 22 and 132 may share the song and/or audio metadata and the dancing trend.

At operation 143, the second user device 132 guides the movements of the second image capturing device 134, which second image capturing device 134 moves synchronously with the first image capturing device 24 (i.e. the two image capturing devices 24 and 134 move together). Alternatively, the first and second image capturing devices may be controlled co-operatively, but not synchronously. By way of example, a first image capturing device may focus of a primary performer, whilst a second image capturing device focuses on a backing dancer who complements the scene but moves quite differently to the primary performer such that the control of the first and second image capturing devices is different.

At operation 144, the first and second users can copy the movements of the image capturing devices 24 and 134 respectively and thereby dance together synchronously.

Once the synchronous dancing is established, the image capturing devices 24 and 134 record video clips in operation 145 and upload those clips in operation 146.

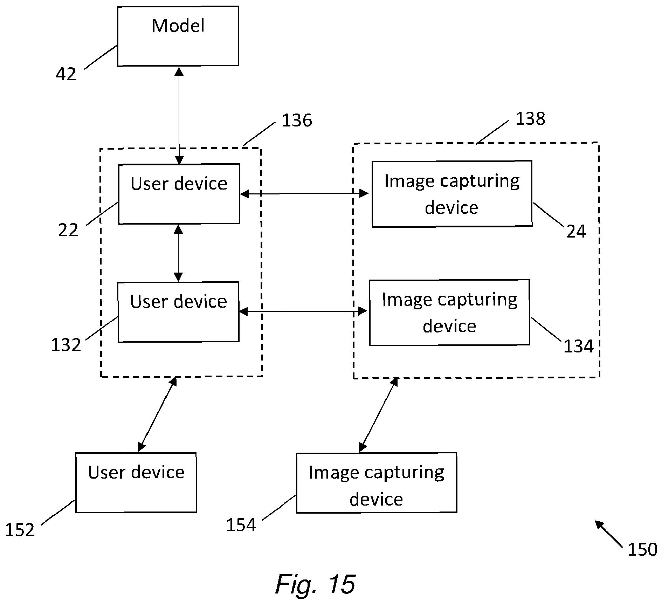

FIG. 15 is a block diagram of a system, indicated generally by the reference numeral 150, in accordance with an example embodiment.

The system 150 comprises the first user device 22, the first image capturing device 24, the model 42, the second user device 132 and the second image capturing device 134 of the system 130 described above. In addition, the system 150 comprises a third user device 152 and a third image capturing device 154.

In the system 150, a third user approaches the first and second users and connects to the same music stream (optionally with permission being granted by the first user). The third user device and the third image capturing device can then be added to the respective groups in the same manner that the second user device and second image capturing device were added to the group as described above with respect to the algorithm 140.

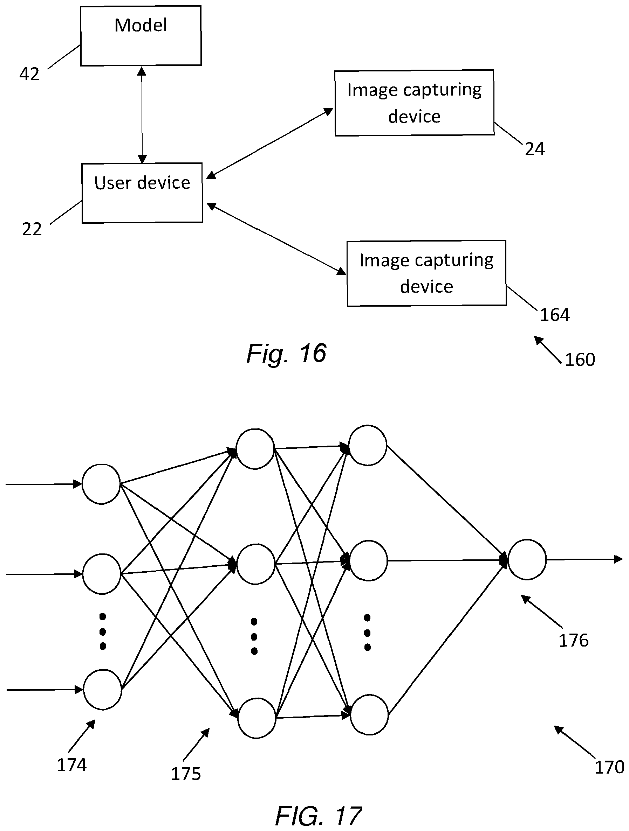

FIG. 16 is a block diagram of a system, indicated generally by the reference numeral 160, in accordance with an example embodiment.

The system 160 comprises the first user device 22, the first image capturing device 24 and the model 42 of the system 40 described above. The system 160 further comprises a second image capturing device 164. The system 160 differs from the system 130 described above in that the second image capturing device is in two-way communication with the first user device 22 (rather than a different user device).

The system 160 can therefore use multiple image capturing device to capture video of the same scene. The user may, for example, launch the two image capturing devices 24 and 164 simultaneously. The first image capturing device 24 may take the lead and position itself depending on the music being played. The second image capturing device 164 may position itself at an angle relative to the first image capturing device 24. The position of the second image capturing device 164 may be controlled to match position changes of the first image capturing device 24. An algorithm may now take the role of producer and toggle between the video streams of the first and second image capturing devices 24 and 164 to create a more compelling video.

The system 160 is provided by way of example only. The system could readily be adapted to include more image capturing devices. Furthermore, the multiple image capturing devices could be controlled in different ways.

FIG. 17 shows a first neural network, indicated generally by the reference numeral 170, used in some example embodiments.

For example, the models 42 and 60 described may comprise the neural network 170. The neural network 170 may be trained, as described above with reference to FIG. 7. The neural network 170 comprises an input layer 174, one or more hidden layers 175, and an output layer 176. At the input layer 174, the data relating to the first user is received as an input. The hidden layers 175 may comprise a plurality of hidden nodes, where the cognitive analytics are performed corresponding to the data received. At the output layer 176, one or more symptomatic experiences corresponding to the input data are provided as an output.

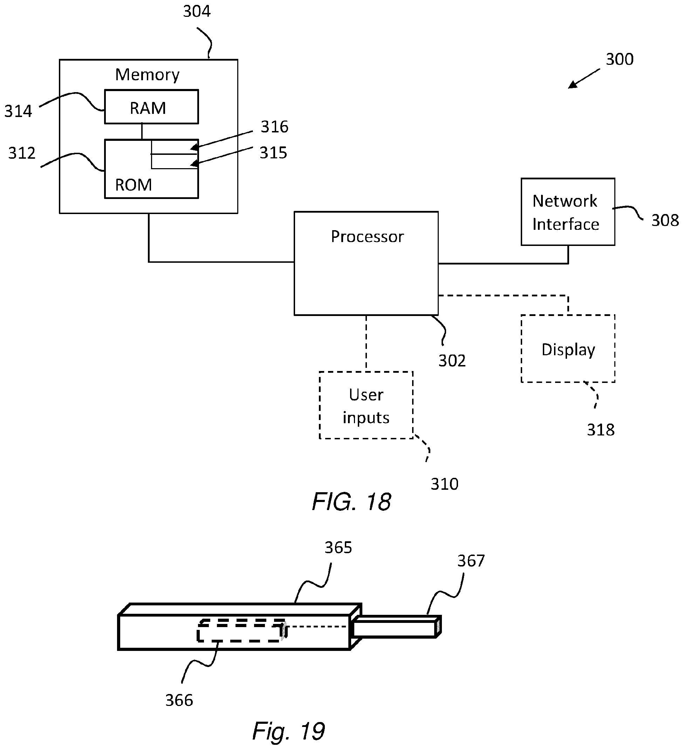

For completeness, FIG. 18 is a schematic diagram of components of one or more of the example embodiments described previously, which hereafter are referred to generically as a processing system 300. The processing system 300 may, for example, be (or may include) the apparatus referred to in the claims below.

The processing system 300 may have a processor 302, a memory 304 coupled to the processor and comprised of a random access memory (RAM) 314 and a read only memory (ROM) 312, and, optionally, a user input 310 and a display 318. The processing system 300 may comprise one or more network/apparatus interfaces 308 for connection to a network/apparatus, e.g. a modem which may be wired or wireless. The network/apparatus interface 308 may also operate as a connection to other apparatus such as device/apparatus which is not network side apparatus. Thus, direct connection between devices/apparatus without network participation is possible.

The processor 302 is connected to each of the other components in order to control operation thereof.

The memory 304 may comprise a non-volatile memory, such as a hard disk drive (HDD) or a solid state drive (SSD). The ROM 312 of the memory 304 stores, amongst other things, an operating system 315 and may store software applications 316. The RAM 314 of the memory 304 is used by the processor 302 for the temporary storage of data. The operating system 315 may contain code which, when executed by the processor implements aspects of the methods and algorithms 50, 70, 80, 90, 100, 110, 120 and 140 described above. Note that in the case of small device/apparatus the memory can be most suitable for small size usage i.e. not always a hard disk drive (HDD) or a solid state drive (SSD) is used.

The processor 302 may take any suitable form. For instance, it may be a microcontroller, a plurality of microcontrollers, a processor, or a plurality of processors.

The processing system 300 may be a standalone computer, a server, a console, or a network thereof. The processing system 300 and needed structural parts may be all inside device/apparatus such as IoT device/apparatus i.e. embedded to very small size.

In some example embodiments, the processing system 300 may also be associated with external software applications. These may be applications stored on a remote server device/apparatus and may run partly or exclusively on the remote server device/apparatus. These applications may be termed cloud-hosted applications. The processing system 300 may be in communication with the remote server device/apparatus in order to utilize the software application stored there.

FIG. 19 shows tangible media, specifically a removable memory unit 365, storing computer-readable code which when run by a computer may perform methods according to example embodiments described above. The removable memory unit 365 may be a memory stick, e.g. a USB memory stick, having internal memory 366 for storing the computer-readable code. The internal memory 366 may be accessed by a computer system via a connector 367. Other forms of tangible storage media may be used. Tangible media can be any device/apparatus capable of storing data/information which data/information can be exchanged between devices/apparatus/network.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices/apparatus and other devices/apparatus. References to computer program, instructions, code etc. should be understood to express software for a programmable processor firmware such as the programmable content of a hardware device/apparatus as instructions for a processor or configured or configuration settings for a fixed function device/apparatus, gate array, programmable logic device/apparatus, etc.

If desired, the different functions discussed herein may be performed in a different order and/or concurrently with each other. Furthermore, if desired, one or more of the above-described functions may be optional or may be combined. Similarly, it will also be appreciated that the flow diagrams of FIGS. 5, 7 to 12 and 14 are examples only and that various operations depicted therein may be omitted, reordered and/or combined.

It will be appreciated that the above described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described example embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

## Claims

1. An apparatus comprising:
means for setting a flight path for one or more aerial image capturing devices, based, at least in part, on one or more parameters, wherein the means for setting the respective flight path(s) comprises a model trained using at least one of: one or more video data examples or one or more flight path examples; and
means for providing instructions to the respective aerial image capturing device(s) to capture video data of a first scene based on the respective flight path.

2. An apparatus as claimed in claim 1, wherein the model is trained using one or more pairs, wherein each pair comprises one of the one or more video data examples and a corresponding one of the one or more flight path examples.

3. An apparatus as claimed in claim 2, wherein at least some of said pairs are associated with audio examples.

4. An apparatus as claimed in claim 2 or claim 3, wherein at least some of said pairs are associated with characteristics of movement scenes.

5. An apparatus as claimed in any one of the preceding claims, wherein the one or more video data examples and/or one or more flight path examples are obtained from one or more of a social media application or historical video content.

6. An apparatus as claimed in any one of the preceding claims, wherein the one or more parameters relate, at least in part, to audio content.

7. An apparatus as claimed in any one of the preceding claims, wherein the one or more parameters are based, at least in part, on a characteristic of the first scene.

8. An apparatus as claimed in any one of the preceding claims, wherein the first scene comprises at least a first user of a first user device, wherein a respective aerial image capturing device is associated with the first user.

9. An apparatus as claimed in claim 8, wherein the respective flight path is configured to provide an indication to at least the first user of one or more movements associated with the respective flight path.

10. An apparatus as claimed in any one of the preceding claims, further comprising means for detecting a trigger for starting a flight sequence of said one or more aerial image capturing device(s), wherein said flight sequence implements said flight path.

11. An apparatus as claimed in claim 10, wherein the trigger is based, at least in part, on a detected movement within the first scene.

12. An apparatus as claimed in claim 10 or claim 11, wherein the trigger is based, at least in part, on start of rendering a first audio.

13. An apparatus as claimed in claim 12, further comprising means for streaming the first audio to one or more of said aerial image capturing device(s).

14. An apparatus as claimed in any one of the preceding claims, further comprising:
means for receiving a request from a second aerial image capturing device to capture the first scene; and
means for providing instructions to the second aerial image capturing device to capture the first scene based on a flight path determined for the second aerial image capturing device.

15. A method comprising:
setting a flight path for one or more aerial image capturing devices, based, at least in part, on one or more parameters, wherein the means for setting the respective flight path(s) comprises a model trained using at least one of: one or more video data examples or one or more flight path examples; and
providing instructions to the respective aerial image capturing device(s) to capture video data of a first scene based on the respective flight path.

16. A computer program comprising instructions for causing an apparatus to perform at least the following:
setting a flight path for one or more aerial image capturing devices, based, at least in part, on one or more parameters, wherein the means for setting the respective flight path(s) comprises a model trained using at least one of: one or more video data examples or one or more flight path examples; and
providing instructions to the respective aerial image capturing device(s) to capture video data of a first scene based on the respective flight path.
